# EUROPEAN PATENT APPLICATION

(11) **EP 3 331 308 A1**
(43) Date of publication of application: **06.06.2018**
(21) Application number: 16789149.8
(22) Date of filing: 21.03.2016
(51) Int. Cl.: H04W 74/00

(54) **METHOD AND SYSTEM FOR DATA TRANSMISSION**

(30) Priority: 27.07.2015 CN 201510445845
(71) Applicant: ZTE Corporation, Shenzhen, Guangdong 518057 (CN)
(72) Inventor: ZHANG, Fang, Shenzhen Guangdong 518057 (CN); DAI, Qian, Shenzhen Guangdong 518057 (CN)
(74) Representative: Lavoix
(86) International application number: PCT/CN2016/076865
(87) International publication number: WO 2016/177155

(57) **Abstract**

A method and system for data transmission are disclosed, the method comprising: the network side transmits pre-scheduling authorization information and conflict resolution information to user equipment; and the network side receives data transmitted by the user equipment on the resource indicated by the pre-scheduling authorization information on the basis of the codebook configuration information carried in the conflict resolution information.

## Description

### TECHNICAL FIELD

The disclosure relates to, but not limited to, the field of wireless communications.

### BACKGROUND

Machine Type Communication (MTC) is defined as communication between equipment and another entity or communication between equipment in a network. Generally, MTC requires no participation of humans, and thus makes the Internet of Things (IoT) possible. At present, along with occurrence of a bottleneck in increase of conventional services, the industry and operating companies pay more and more attentions to the IoT.

Due to a huge commercial value of MTC, the 3rd Generation Partnership Project (3GPP) enhances an air interface part in a cellular network communication technology to support the IoT at present. The 3GPP sets up multiple workgroups to make researches in this field, particularly in Long Term Evolution (LTE) Release 12 (R12).

For MTC, a difference in its service requirement with conventional Human-to-Human (H2H) communication is particularly required to be considered. For example, in an application such as intelligent measurement, massive users are usually required to access a network at the same time, a traffic volume of each piece of equipment is very low, but there is made a relatively higher requirement on a transmission delay. Such an application scenario represents some typical properties of MTC and arouses broad concerns and researches. For such an application scenario where multiple requirements such as massive users, small data packets, low delays and energy saving are simultaneously made, the network is required to provide a more effective data transmission manner.

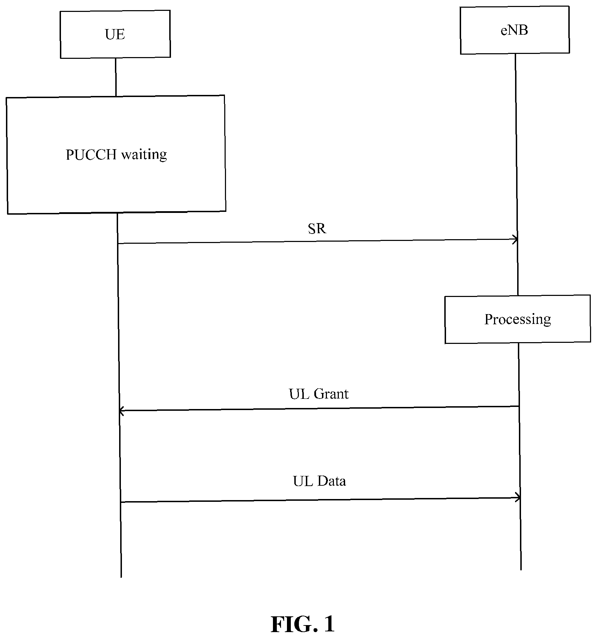

In LTE of a related technology, a scheduling application manner is adopted for data transmission of User Equipment (UE). FIG. 1 is a flowchart of data transmission in a scheduling application manner according to the related technology. As shown in FIG. 1, UE is located in a service gap after completing connection, and a network reserves a dedicated Uplink (UL) control channel for the UE, and releases other physical channel resources. When being required to send UL data, the UE sends a Scheduling Request (SR) on a dedicated Physical Uplink Control Channel (PUCCH); and after receiving it, a network side (for example, an Evolved Node B (eNB)) sends Scheduling Grant (SG) Information (Info) to the UE, and then the UE performs UL data transmission on a grant resource.

In an initial data transmission stage of UE, a Contention-Based (CB) resource is also usually required to be used. One is that the UE performs random access when accessing a network for the first time. The other condition is that the UE may enter a dormant status in a data gap process after accessing the network to reduce a battery overhead and network resource overhead of the UE, and when UL data arrives, the UE is in an "asynchronous" status or has no available UL control channel resource, and sends signaling to notify the network to acquire a subsequent UL transmission resource.

For a service with a small data packet and a short delay in MTC, in order to reduce the transmission delay, a resource Pre-Scheduling manner may also be adopted, that is, no matter whether UE has data or not, there is always a dedicated data channel allocated to the UE, and when being required to send data, the UE may send the data on the dedicated data channel. However, such a solution has the shortcoming that an eNB is required to reserve a part of dedicated resources for the UE no matter whether the UE has UL data to be transmitted or not, which may cause a resource waste.

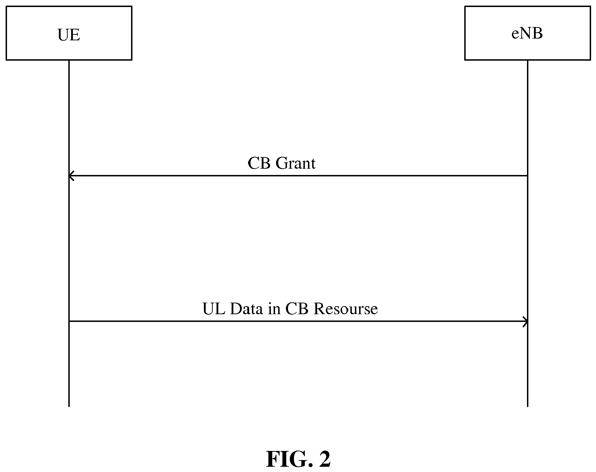

In order to avoid the resource waste, the dedicated data channel may be changed into a CB data channel to implement CB transmission, which is also called as a CB manner. A UL resource is shared in a few pieces of UE, and when UL data of the UE arrives, the data is sent by contention. FIG. 2 is a flowchart of data transmission in a CB manner according to the related technology. As shown in FIG. 2, a network side (for example, an eNB) sends a CB resource grant, and after receiving it, UE performs UL data transmission on a CB resource. When a service load is relatively lower and relatively fewer pieces of UE share a CB resource, relatively higher performance may be achieved.

However, such a solution has the problem that, when relatively more UE shares the CB resource, it is difficult for an eNB side to correctly decode data from each piece of UE, and meanwhile, the eNB side may not distinguish whether a receiving failure is caused by a collision or a transmission quality problem and thus effective retransmission may not be effectively performed. For example, UE1 and UE2 simultaneously transmit data on the CB resource, the eNB side may not correctly decode the data from the UE1 and the UE2, and thus may not give a response; or, the eNB side receives the data from the UE1, but Cyclic Redundancy Check (CRC) fails, the eNB side may not recognize whether a transmission failure is caused by a collision or radio link quality, and if a conventional retransmission manner is adopted, the collision exists persistently, so that not only is a radio resource wasted, but also a data transmission delay is greatly prolonged. A common solution in the related technology is to adopt Radio Link Control (RLC) retransmission. However, RLC retransmission may consume relatively more radio resources, and is also unfavorable for the data transmission delay.

Thus, it can be seen that, although the solution in the related technology provides a basic process of data transmission in a CB manner, there is no better solution to a processing process for an abnormity such as a collision and a data transmission error.

### SUMMARY

The below is a summary about a theme described in the disclosure in detail. The summary is not intended to limit the scope of protection of the claims.

In order to meet future higher requirements on high capacities, low delays and massive connections, the related technology discloses a novel multiple access multiplexing manner, for example, non-orthogonal multi-user Info theory-based Multi-User Shared Access (MUSA) and Sparse Codebook Multiple Access (SCMA). A complex domain spread spectrum codebook and an advanced multi-user detection algorithm on a receiving side are designed to enable a system to support high-reliability access of a multiplied number of users on the same time-frequency resource; and moreover, a resource scheduling process in an access flow may be simplified, so that system implementation of massive ace may be simplified, an access time for massive access is shortened, and energy consumption of a terminal is reduced. These novel multiple access multiplexing manners are particularly suitable for solving the problem of collisions in data transmission. However, present discussions about the novel multiple access multiplexing manner are still mainly concentrated on the aspect of physical-layer sending and receiving, and high-layer configuration and signaling flows and how to combine with a data transmission method using a CB manner remain to be studied.

The disclosure provides a data transmission method and system, adopted to solve the problem of collisions caused by resource contention of multiple pieces of UE in the related technology.

A data transmission method may include that: a network side sends Pre-Scheduling Grant Info and Collision Resolution (CR) Info to UE; and the network side receives data sent by the UE on a resource indicated by the Pre-Scheduling Grant Info according to codebook configuration Info contained in the CR info.

Optionally, the codebook configuration Info may include: Codebook Group Info and Info about a Codebook Index in Group, and a codebook may be a spread spectrum codebook with an orthogonal or quasi-orthogonal property.

Optionally, before the operation that the network side sends the Pre-Scheduling Grant Info and the CR info to the UE, the method may further include that: the network side configures the CR info for the UE.

Optionally, the operation that the network side configures the CR info for the UE may include that:
the network side configures the Codebook Group Info and the Info about the Codebook Index in Group for each piece of UE; or,
the network side configures the Codebook Group Info for each piece of UE.

Optionally, the method may further include that: the network side updates or reconfigures the Pre-Scheduling Grant Info and CR info sent to the UE periodically or under triggering of a triggering event.

Optionally, the network side may send the Pre-Scheduling Grant Info and the CR info to the UE in any one or more of the following manners:
the network side sends the Pre-Scheduling Grant Info and the CR info to the UE through one or more pieces of control signaling on a Physical Downlink Control Channel (PDCCH), and indicates the Pre-Scheduling Grant Info and the CR info through one or more pieces of identification Info;
the network side sends the Pre-Scheduling Grant Info and the CR info to the UE through a Physical Downlink Shared Channel (PDSCH), sends signaling containing downlink grant Info through the PDCCH, and indicates the downlink grant Info to be downlink grant Info for a Media Access Control (MAC) Control Element (CE) that contains the CR info; and
the network side sends the Pre-Scheduling Grant Info and the CR info to the UE through Radio Resource Control (RRC) Connection Reconfiguration signaling.

Optionally, after the operation that the network side receives the data sent by the UE on the resource indicated by the Pre-Scheduling Grant Info according to the codebook configuration Info contained in the CR info, the method may further include at least one of the following steps:
when the network side successfully decodes the data sent by the UE, the network side sends an Acknowledgement (ACK) response message to the UE; or,
when the network side fails to decode the data sent by the UE and the network side does not successfully detect a CR UE Identifier (ID) sent by the UE, the network side does not send any response message to the UE; or,
when the network side fails to decode the data sent by the UE and the network side successfully detects the CR UE ID sent by the UE, the network side sends a Negative Acknowledgement (NACK) response message to the UE, and sends, to the UE, UL SG Info for data retransmission.

Optionally, when the network side sends the ACK response message to the UE, the method may further include that: if the network side judges that there is still data required to be transmitted in a Buffer of the UE, the network side sends, to the UE, UL SG Info for new data transmission.

A data transmission method may include that: UE receives Pre-Scheduling Grant Info and CR info sent by a network side; and the UE sends data to the network side on a resource indicated by the Pre-Scheduling Grant Info according to codebook configuration Info contained in the CR info.

Optionally, the codebook configuration Info may include: Codebook Group Info and Info about a Codebook Index in Group, and a codebook may be a spread spectrum codebook with an orthogonal or quasi-orthogonal property.

Optionally, the operation that the UE sends the data to the network side on the resource indicated by the Pre-Scheduling Grant Info according to the codebook configuration Info contained in the CR info may include that:
the UE acquires or selects a spread spectrum codebook according to the codebook configuration Info contained in the CR info, and after extending original data by using the spread spectrum codebook, sends UL data on the resource indicated by the Pre-Scheduling Grant Info, and sends or carries a CR UE ID and/or Buffer Status Report (BSR) Info.

Optionally, the operation that the UE acquires or selects the spread spectrum codebook according to the codebook configuration Info contained in the CR info, and after extending the original data by using the spread spectrum codebook, sends the UL data on the resource indicated by the Pre-Scheduling Grant Info and sends or carries the CR UE ID may include that:
the UE sends UE dedicated SR signaling by virtue of a PUCCH, a time-frequency resource location of the SR signaling being in one-to-one correspondence with the UE ID; or,
the UE carries a mask uniquely corresponding to the UE ID in the PUCCH or a Physical Uplink Shared Channel (PUSCH).

Optionally, after the operation that the UE sends the data to the network side on the resource indicated by the Pre-Scheduling Grant Info according to the codebook configuration Info contained in the CR info, the method may further include that: the UE receives a response feedback message sent by the network side, and acknowledges a data transmission success or failure according to the response feedback message.

Optionally, after the operation that the UE sends the data to the network side on the resource indicated by the Pre-Scheduling Grant Info according to the codebook configuration Info contained in the CR info, the method may further include that: when there is still data required to be transmitted in a Buffer of the UE and the UE receives UL grant Info sent by the network side, the new data is transmitted or the data is retransmitted on a UL grant resource indicated by the UL grant Info.

A data transmission system may be applied to a network side and include: a first sending module, arranged to send Pre-Scheduling Grant Info and CR info to UE; and a first receiving module, arranged to receive data sent by the UE on a resource indicated by the Pre-Scheduling Grant Info according to codebook configuration Info contained in the CR info.

Optionally, the codebook configuration Info may include: Codebook Group Info and Info about a Codebook Index in Group, and a codebook may be a spread spectrum codebook with an orthogonal or quasi-orthogonal property.

Optionally, the system may further include: a configuration module, arranged to configure the CR info for the UE.

Optionally, the configuration module may be arranged to:
configure the Codebook Group Info and the Info about the Codebook Index in Group for each piece of UE; or,
configure the Codebook Group Info for each piece of UE.

Optionally, the system may further include: a configuration module, arranged to update or reconfigure the Pre-Scheduling Grant Info and CR info sent to the UE periodically or under triggering of a triggering event.

Optionally, the first sending module may be arranged to send the Pre-Scheduling Grant Info and the CR info to the UE in any one or more of the following manners:
sending the Pre-Scheduling Grant Info and the CR info to the UE through one or more pieces of control signaling on a PDCCH, and indicating the Pre-Scheduling Grant Info and the CR info through one or more pieces of identification Info;
sending the Pre-Scheduling Grant Info and the CR info to the UE through a PDSCH, sending signaling containing downlink grant Info through the PDCCH, and indicating the downlink grant Info to be downlink grant Info for a MAC CE that contains the CR info; and
sending the Pre-Scheduling Grant Info and the CR info to the UE through RRC Connection Reconfiguration signaling.

Optionally, the first sending module may further be arranged to: execute at least one of the following steps:
when successfully decoding the data sent by the UE, sending an ACK response message to the UE;
when failing to decode the data sent by the UE and not successfully detecting a CR UE ID sent by the UE, not sending any response message to the UE; and
when failing to decode the data sent by the UE and successfully detecting the CR UE ID sent by the UE, sending a NACK response message to the UE, and sending, to the UE, UL SG Info for data retransmission.

Optionally, the first sending module may further be arranged to: when sending the ACK response message to the UE, if judging that there is still data required to be transmitted in a Buffer of the UE, send, to the UE, UL SG Info for new data transmission.

A data transmission system may be applied to UE and include: a second receiving module, arranged to receive Pre-Scheduling Grant Info and CR info sent by a network side; and a second sending module, arranged to send data to the network side on a resource indicated by the Pre-Scheduling Grant Info according to codebook configuration Info contained in the CR info.

Optionally, the codebook configuration Info may include: Codebook Group Info and Info about a Codebook Index in Group, and a codebook may be a spread spectrum codebook with an orthogonal or quasi-orthogonal property.

Optionally, the second sending module may be arranged to acquire or select a spread spectrum codebook according to the codebook configuration Info contained in the CR info, and after extending original data by using the spread spectrum codebook, send UL data on the resource indicated by the Pre-Scheduling Grant Info, and send or contain a CR UE ID and/or BSR Info.

Optionally, the second sending module may be arranged to:
send UE dedicated SR signaling by virtue of a PUCCH, a time-frequency resource location of the SR signaling being in one-to-one correspondence with the UE ID; or,
contain a mask uniquely corresponding to the UE ID in the PUCCH or a PUSCH.

Optionally, the second receiving module may further be arranged to receive a response feedback message sent by the network side, and acknowledge a data transmission success or failure according to the response feedback message.

Optionally, the second sending module may further be arranged to, when there is still data required to be transmitted in a Buffer of the UE and the receiving module receives UL grant Info sent by the network side, transmit the new data or retransmit the data on a UL grant resource indicated by the UL grant Info.

A computer-readable storage medium may store a computer-executable instruction, and computer-executable instruction may be arranged to execute any abovementioned method.

In embodiments of the disclosure, the network side sends the Pre-Scheduling Grant Info and the CR info to the UE; and the network side receives the data sent by the UE on the resource indicated by the Pre-Scheduling Grant Info according to the codebook configuration Info contained in the CR info. By the embodiments of the disclosure, a UL data sending delay is shortened, meanwhile, the problem of collisions caused by resource contention of multiple pieces of UE is effectively solved, and resource waste is avoided.

After the drawings and the detailed descriptions are read and understood, the other aspects may be comprehended.

### BRIEF DESCRIPTION OF DRAWINGS

FIG. 1 is a flowchart of data transmission in a scheduling application manner according to the related technology.
FIG. 2 is a flowchart of data transmission in a CB manner according to the related technology.
FIG. 3 is a flowchart of a data transmission method according to an embodiment of the disclosure.
FIG. 4 is a flowchart of a data transmission method according to an embodiment of the disclosure.
FIG. 5 is a flowchart of a data transmission method according to embodiment 1 of the disclosure.
FIG. 6 is a schematic diagram of a codebook according to embodiment 1 of the disclosure.
FIG. 7 is a data structure diagram of CR info according to embodiment 1 of the disclosure.
FIG. 8 is a schematic diagram of a data transmission system (applied to a network side) according to an embodiment of the disclosure.
FIG. 9 is a schematic diagram of a data transmission system (applied to UE) according to an embodiment of the disclosure.

### DETAILED DESCRIPTION

Implementation modes of the disclosure will be described below in combination with the drawings in detail.

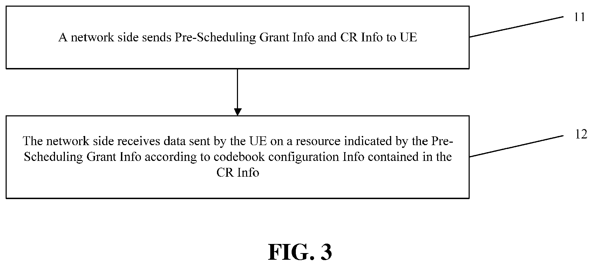

FIG. 3 is a flowchart of a data transmission method according to an embodiment of the disclosure. As shown in FIG. 3, the data transmission method provided by the embodiment includes the following steps.

In Step 11, a network side sends Pre-Scheduling Grant Info and CR info to UE.

Before Step 11, the method further includes that: the network side configures the CR info for the UE.

Wherein, the CR info includes codebook configuration Info, and the codebook configuration Info includes: Codebook Group Info and Info about a Codebook Index in Group. Here, a codebook is a spread spectrum codebook, for example, a complex domain pseudo-random sequence and a low-density spread spectrum codebook, and has an orthogonal or quasi-orthogonal property, and the network side adopts an advanced receiver technology, and may effectively distinguish data from different UE. The network side groups all available codebooks, herein grouping is performed according to autocorrelation and cross correlation properties of the codebooks, and the codebooks with better autocorrelation and cross correlation properties are divided into the same group. The network side determines the codebook configuration Info of the UE according to Info such as a system load, user context Info, an interference and wireless channel quality status and an available time-frequency domain resource number.

Here, the operation that the network side configures the CR info for the UE includes that:
the network side configures Codebook Group Info and Info about a Codebook Index in Group for each piece of UE; or,
the network side configures the Codebook Group Info for each piece of UE.

Wherein, when the network side configures the Codebook Group Info and the Info about the Codebook Index in Group for each piece of UE, after obtaining the Info, the UE directly obtains an original codebook, and sends the data after using the codebook for spread spectrum processing; and when the network side configures the Codebook Group Info for each piece of UE, after obtaining the Info, the UE selects a codebook from a Codebook Group, and sends the data after using the codebook for spread spectrum processing.

Here, Step 11 includes any one or more of the following manners:
the network side sends the Pre-Scheduling Grant Info and the CR info to the UE through one or more pieces of control signaling on a PDCCH, and indicates Info in the control signaling to be the Pre-Scheduling Grant Info and the CR info through one or more pieces of identification Info, herein the Pre-Scheduling Grant Info and the CR info may be placed in the same control signaling, may also be divided into multiple pieces of control signaling for respective sending, and is distinguished and identified with different identification Info;
the network side sends the Pre-Scheduling Grant Info and the CR info to the UE through a PDSCH, sends signaling containing downlink grant Info through the PDCCH, and indicates the downlink grant Info to be downlink grant Info for a MAC CE that contains the CR info; and
the network side sends the Pre-Scheduling Grant Info and the CR info to the UE through RRC Connection Reconfiguration signaling, for example, sending through the RRC Connection Reconfiguration signaling.

In Step 12, the network side receives data sent by the UE on a resource indicated by the Pre-Scheduling Grant Info according to codebook configuration Info contained in the CR info.

Here, after Step 12, the method may further include at least one of the following steps:
when the network side successfully decodes the data sent by the UE, the network side sends an ACK response message to the UE;
when the network side fails to decode the data sent by the UE and the network side does not successfully detect a CR UE ID sent by the UE, the network side does not send any response message to the UE; and
when the network side fails to decode the data sent by the UE and the network side successfully detects the CR UE ID sent by the UE, the network side sends a NACK response message to the UE, and sends, to the UE, UL SG Info for data retransmission.

Wherein, when the network side sends the ACK response message to the UE, if the network side judges that there is still data required to be transmitted in a Buffer of the UE, the network side sends, to the UE, UL SG Info for new data transmission.

In addition, the method may further include that: the network side updates or reconfigures the Pre-Scheduling Grant Info and CR info sent to the UE periodically or under triggering of a triggering event, herein the network side updates or reconfigures the Pre-Scheduling Grant Info and CR info sent to the UE according to Info such as a system load status, a user location and status change, an interference and wireless channel quality change and the available time-frequency domain resource number.

The embodiment of the disclosure further provides a computer-readable storage medium, which stores a computer-executable instruction, the computer-executable instruction being arranged to execute the method.

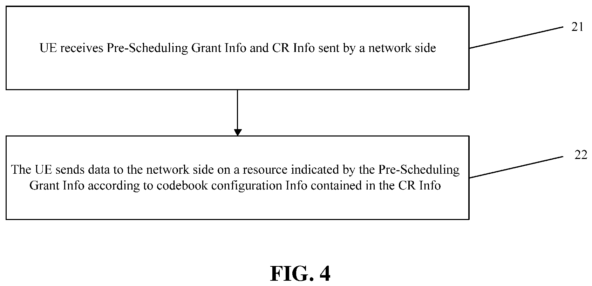

FIG. 4 is a flowchart of a data transmission method according to an embodiment of the disclosure. As shown in FIG. 4, the data transmission method provided by the embodiment includes the following steps.

In Step 21, UE receives Pre-Scheduling Grant Info and CR info sent by a network side.

Wherein, the CR info includes codebook configuration Info, and the codebook configuration Info includes: Codebook Group Info and Info about a Codebook Index in Group. A codebook is a spread spectrum codebook with an orthogonal or quasi-orthogonal property. Descriptions about the codebook configuration Info are the same as the previous embodiment, and thus will not be elaborated herein.

In Step 22, the UE sends data to the network side on a resource indicated by the Pre-Scheduling Grant Info according to codebook configuration Info contained in the CR info.

Here, Step 22 includes that: the UE acquires or selects a spread spectrum codebook according to the codebook configuration Info contained in the CR info, and after extending original data by using the spread spectrum codebook, sends UL data on the resource indicated by the Pre-Scheduling Grant Info, and sends or carries a CR UE ID and/or BSR Info, herein this process includes that:
the UE sends UE dedicated SR signaling by virtue of a PUCCH, a time-frequency resource location of the SR signaling being in one-to-one correspondence with the UE ID; or,
the UE carries a mask uniquely corresponding to the UE ID in the PUCCH or a PUSCH.

Here, after Step 22, the method may further include that: the UE receives a response feedback message sent by the network side, and acknowledges a data transmission success or failure according to the response feedback message.

Here, after Step 22, the method may further include that: when there is still data required to be transmitted in a Buffer of the UE and the UE receives UL grant Info sent by the network side, the new data is transmitted or the data is retransmitted on a UL grant resource indicated by the UL grant Info.

The embodiment of the disclosure further provides a computer-readable storage medium, which stores a computer-executable instruction, the computer-executable instruction being arranged to execute the method.

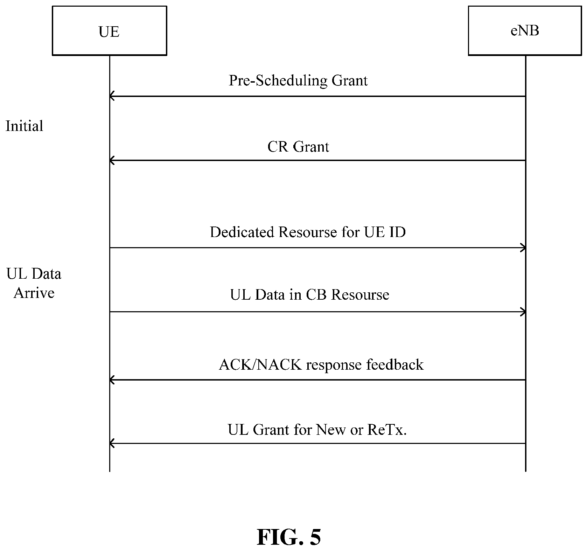

FIG. 5 is a flowchart of a data transmission method according to embodiment 1 of the disclosure. As shown in FIG. 5, the embodiment is described as follows.

In Step 101, a network side (an eNB) sends Pre-Scheduling Grant Info to UE, and meanwhile, configures CR Info for the UE.

Wherein, the Pre-Scheduling Grant Info includes a time-frequency location of a CB resource the UE is allowed to use, a modulation and coding scheme for data sending of the UE and the like.

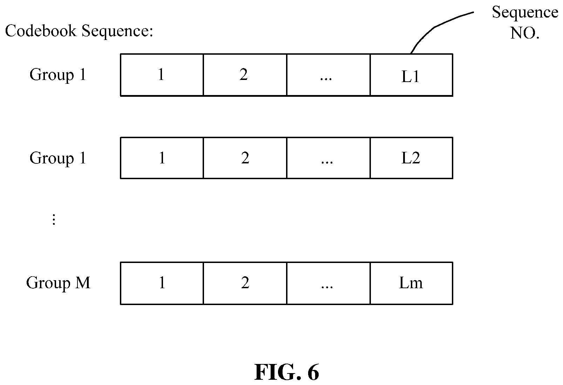

The CR Info includes codebook configuration Info. FIG. 6 is a schematic diagram of a codebook according to embodiment 1 of the disclosure. As shown in FIG. 6, available codebooks are grouped, an in-group sequence has relatively higher orthogonality, or is more favorable for separating different UE during demodulation of a receiver, herein the available codebooks are, for example, complex domain pseudo-random sequence codebooks. It is hypothesized that there are two sets of pseudo-random codebook sequences A={x₁, x₂, ..., xₙ} and B={y₁, y₂, ..., yₙ}, where xᵢ is a sequence with a length N, and i=1,2,...,n; yⱼ is a sequence with a length M, and j=1,2,...m; the sequence xᵢ in the set A has a relatively higher autocorrelation and cross correlation; and the sequence yⱼ in the set B has a relatively higher autocorrelation and cross correlation.

When configuring the codebook Info, the network side groups the UE, divides the UE with relatively stronger mutual interference into the same group, and configures the same Codebook Group for them. For example, the eNB may configure the Codebook Group Info and the Info about the Codebook Index in Group for each piece of UE, and may only configure the Codebook Group Info. When the eNB only configures the Codebook Group Info for the UE, the UE randomly selects the Index in Group, and reports the Info about the Codebook Index in Group to the eNB together with the data.

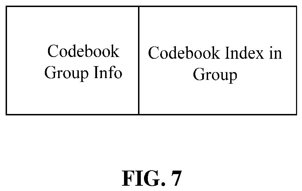

A data structure of the CR Info, as shown in FIG. 7, includes Codebook Group Info and Info about a Codebook Index in Group. The configuration Info may be selected according to a practical requirement.

Here, for example, for an LTE system, the Pre-Scheduling Grant Info and the CR Info may be sent in the following three manners.

A first manner: the eNB sends the Pre-Scheduling Grant Info and the CR Info to the UE through Downlink Control Information (DCI) on a PDCCH, herein the eNB may configure multiple Pre-Scheduling and CR solutions for the UE, and distinguish them with dedicated T-RNTIs.

A second manner: the eNB sends downlink grant Info on the PDCCH, and indicates the UE to receive the Pre-Scheduling grant Info and the CR Info on a PDSCH, and meanwhile, the eNB indicates that downlink grant Info for a MAC CE is sent on the PDCCH through a special ID contained in the PDCCH (for example, a CR-RNTI, the RNTI being contained in a CRC of the PDCCH in a mask manner), the MAC CE being a special MAC CE containing Pre-Scheduling Info and the CR Info.

A third manner: the eNB sends the Pre-Scheduling Info and the CR Info to the UE through RRC Connection Reconfiguration signaling.

Here, the eNB updates or reconfigures the Pre-Scheduling Grant Info and CR Info sent to the UE according to Info such as a system load status, a UE location and status change and an interference and wireless channel quality change, herein the Pre-Scheduling Grant Info and the CR Info may be updated or rearranged in a periodic triggering or event triggering manner.

In Step 102, the UE receives the Pre-Scheduling Grant Info and the CR Info from the eNB. For example, under the condition of the first manner in Step 101, the UE identifies the Pre-Scheduling Grant Info and the CR Info through the T-RNTI; and when UL data arrives, the UE judges whether to adopt a new data transmission manner or adopt a conventional LTE SG data transmission manner according to Info such as a Quality of Service (QoS) requirement and data volume of a current service, and when a service delay requirement is higher than a specified threshold and the data volume of the service is smaller than another specified threshold, the UE decides to adopt the new data transmission manner on a grant resource indicated by the Pre-Scheduling Grant Info.

The UE sends the UL data on the Pre-Scheduling Grant resource according to a configuration in the CR Info, and meanwhile, sends or carries a CR UE ID and BSR Info. For example, for the LTE system, the following manners are included.

A first manner: the UE sends UE dedicated SR signaling by virtue of a PUCCH, a time-frequency resource location of the SR signaling being in one-to-one correspondence with the UE, and the eNB may parse the SR signaling to learn about the UL data required to be sent by the UE. Such a manner is compatible with conventional SR signaling of the LTE system.

A second manner: a mask uniquely corresponding to the UE ID is contained in the PUCCH or a PUSCH, and the eNB detects the mask on the PUCCH or the PUSCH, and compares it with the UE ID to learn about the UL data required to be sent by the UE.

In Step 103, the eNB receives data from the UE, feeds back a response message to the UE according to a decoding status to indicate a data transmission success or failure, simultaneously judges whether there is still new data required to be sent in a Buffer of a UE side or not, and if there is new data required to be sent or there is data required to be retransmitted, sends UL SG Info, herein the UL grant Info at least includes: a time-frequency resource location and a modulation and coding scheme for a sending manner indicated by a user. Here, such a process may be divided into the following conditions.
(1) If the CR UE ID is not successfully detected but the data is successfully decoded, the eNB sends an ACK response message to the UE, and if judging that there is still data required to be sent in the Buffer of the UE side, sends, at the same time, the UL SG Info for new data transmission.
(2) If the CR UE ID is not successfully detected and the data is failed to be decoded, the eNB does not send any response message.
(3) If the CR UE ID is successfully detected and the data is successfully detected, the eNB sends the ACK response message to the UE, and if judging there is still data required to be sent in the Buffer of the UE side, sends, at the same time, the UL SG Info for new data transmission.
(4) If the CR UE ID is successfully detected but the data is failed to be decoded, the eNB sends a NACK response message to the UE, simultaneously sends UL SG Info arranged to retransmit the data, and performs adaptive retransmission.

In Step 104, the UE receives the response feedback message from the eNB, acknowledges the data transmission success or failure according to the response feedback message, and if there is still data required to be sent in the Buffer of the UE side, receives the UL grant Info from the eNB, and sends the new data or retransmits the data on a UL grant resource indicated by the UL grant Info.

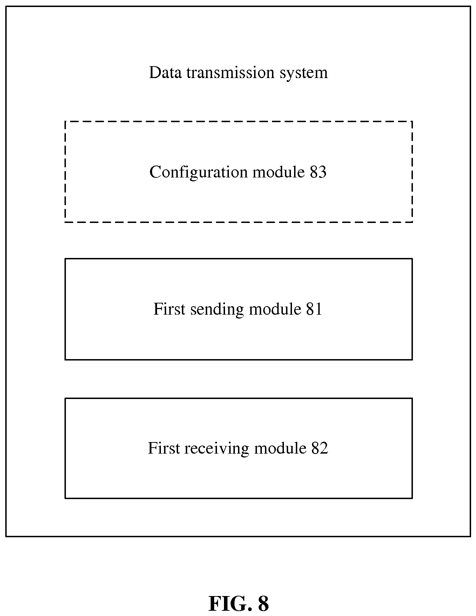

As shown in FIG. 8, an embodiment of the disclosure further provides a data transmission system, which is applied to a network side and includes: a first sending module 81, arranged to send Pre-Scheduling Grant Info and CR info to UE; and a first receiving module 82, arranged to receive data sent by the UE on a resource indicated by the Pre-Scheduling Grant Info according to codebook configuration Info contained in the CR info.

Wherein, the codebook configuration Info includes: Codebook Group Info and Info about a Codebook Index in Group, and a codebook is a spread spectrum codebook with an orthogonal or quasi-orthogonal property.

In an embodiment, the system further includes: a configuration module 83, arranged to configure the CR info for the UE. The configuration module 83 is arranged to: configure the Codebook Group Info and the Info about the Codebook Index in Group for each piece of UE; or, configure the Codebook Group Info for each piece of UE.

In an embodiment, the configuration module 83 is further arranged to update or reconfigure the Pre-Scheduling Grant Info and CR info sent to the UE periodically or under triggering of a triggering event.

In an embodiment, the first sending module 81 is arranged to send the Pre-Scheduling Grant Info and the CR info to the UE in any one or more of the following manners:
sending the Pre-Scheduling Grant Info and the CR info to the UE through one or more pieces of control signaling of a PDCCH, and indicating the Pre-Scheduling Grant Info and the CR info through one or more pieces of identification Info;
sending the Pre-Scheduling Grant Info and the CR info to the UE through a PDSCH, sending signaling containing downlink grant Info through the PDCCH, and indicating the downlink grant Info to be downlink grant Info for a MAC CE that contains the CR info; and
sending the Pre-Scheduling Grant Info and the CR info to the UE through RRC Connection Reconfiguration signaling.

In an embodiment, the first sending module 81 is further arranged to: execute at least one of the following steps:
when successfully decoding the data sent by the UE, sending an ACK response message to the UE;
when failing to decode the data sent by the UE and not successfully detecting a CR UE ID sent by the UE, not sending any response message to the UE; and
when failing to decode the data sent by the UE and successfully detecting the CR UE ID sent by the UE, sending a NACK response message to the UE, and sending, to the UE, UL SG Info for data retransmission.

Wherein, the first sending module 81 is further arranged to: when sending the ACK response message to the UE, if judging that there is still data required to be transmitted in a Buffer of the UE, send, to the UE, UL SG Info for new data transmission.

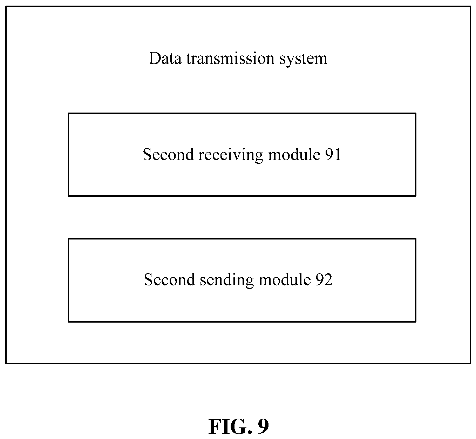

As shown in FIG. 9, an embodiment of the disclosure further provides a data transmission system, which is applied to UE and includes: a second receiving module 91, arranged to receive Pre-Scheduling Grant Info and CR info sent by a network side; and a second sending module 92, arranged to send data to the network side on a resource indicated by the Pre-Scheduling Grant Info according to codebook configuration Info contained in the CR info.

Wherein, the codebook configuration Info includes: Codebook Group Info and Info about a Codebook Index in Group, and a codebook is a spread spectrum codebook with an orthogonal or quasi-orthogonal property.

In an embodiment, the second sending module 92 is arranged to acquire or select a spread spectrum codebook according to the codebook configuration Info contained in the CR info, and after extending original data by using the spread spectrum codebook, send UL data on the resource indicated by the Pre-Scheduling Grant Info, and send or contain a CR UE ID and/or BSR Info.

Wherein, the second sending module 92 is arranged to:
send UE dedicated SR signaling by virtue of a PUCCH, a time-frequency resource location of the SR signaling being in one-to-one correspondence with the UE ID; or,
contain a mask uniquely corresponding to the UE ID in the PUCCH or a PUSCH.

In an embodiment, the second receiving module 91 is further arranged to receive a response feedback message sent by the network side, and acknowledge a data transmission success or failure according to the response feedback message.

In an embodiment, the second sending module 92 is further arranged to, when there is still data required to be transmitted in a Buffer of the UE and the receiving module receives UL grant Info sent by the network side, transmit the new data or retransmit the data on a UL grant resource indicated by the UL grant Info.

In addition, processing flows of the systems are similar to the methods, and thus will not be elaborated herein.

Those skilled in the art should know that all or part of the steps of the embodiments may be implemented by a flow of a computer program, the computer program may be stored in a computer-readable storage medium, the computer program is executed on a corresponding hardware platform (for example, a system, equipment, a device and an apparatus), and during execution, one or combination of the steps of the method embodiments is included.

Optionally, all or part of the steps of the embodiments may further be implemented by virtue of an integrated circuit, these steps may form multiple integrated circuit modules respectively, or multiple modules or steps therein may form a single integrated circuit module for implementation.

The devices/function modules/units in the embodiments may be implemented by using a universal computing device, and they may be concentrated on a single computing device, and may also be distributed on a network formed by multiple computing devices.

When being implemented in form of software function module and sold or used as independent products, the devices/function modules/function units in the embodiments may be stored in a computer-readable storage medium. The abovementioned computer-readable storage medium may be a read-only memory, a magnetic disk, an optical disk or the like.

### INDUSTRIAL APPLICABILITY

By the embodiments of the disclosure, a UL data sending delay is shortened, the problem of collisions caused by resource contention of multiple pieces of UE is effectively solved, and resource waste is avoided.

## Claims

1. A data transmission method, comprising:
sending, by a network side, Pre-Scheduling Grant Information (Info) and Collision Resolution (CR) Info to User Equipment (UE); and
receiving, by the network side, data sent by the UE on a resource indicated by the Pre-Scheduling Grant Info according to codebook configuration Info contained in the CR Info.

2. The method according to claim 1, wherein the codebook configuration Info comprises: Codebook Group Info and Info about a Codebook Index in Group, and a codebook is a spread spectrum codebook with an orthogonal or quasi-orthogonal property.

3. The method according to claim 1, further comprising: before sending, by the network side, the Pre-Scheduling Grant Info and the CR Info to the UE,
configuring, by the network side, the CR Info for the UE.

4. The method according to claim 3, wherein configuring, by the network side, the CR Info for the UE comprises:
configuring, by the network side, the Codebook Group Info and the Info about the Codebook Index in Group for each piece of UE; or,
configuring, by the network side, the Codebook Group Info for each piece of UE.

5. The method according to claim 1, further comprising: updating or reconfiguring, by the network side, the Pre-Scheduling Grant Info and CR Info sent to the UE periodically or under triggering of a triggering event.

6. The method according to claim 1, wherein the network side sends the Pre-Scheduling Grant Info and the CR Info to the UE in any one or more of the following manners:
the network side sends the Pre-Scheduling Grant Info and the CR Info to the UE through one or more pieces of control signaling on a Physical Downlink Control Channel (PDCCH), and indicates the Pre-Scheduling Grant Info and the CR Info through one or more pieces of identification Info;
the network side sends the Pre-Scheduling Grant Info and the CR Info to the UE through a Physical Downlink Shared Channel (PDSCH), sends signaling containing downlink grant Info through the PDCCH, and indicates the downlink grant Info to be downlink grant Info for a Media Access Control (MAC) Control Element (CE) that contains the CR Info; or
the network side sends the Pre-Scheduling Grant Info and the CR Info to the UE through Radio Resource Control (RRC) Connection Reconfiguration signaling.

7. The method according to claim 1, after receiving, by the network side, the data sent by the UE on the resource indicated by the Pre-Scheduling Grant Info according to the codebook configuration Info contained in the CR Info, the method further comprising at least one of the following steps:
when the network side successfully decodes the data sent by the UE, sending, by the network side, an Acknowledgement (ACK) response message to the UE; or,
when the network side fails to decode the data sent by the UE and the network side does not successfully detect a CR UE Identifier (ID) sent by the UE, not sending, by the network side, a response message to the UE; or,
when the network side fails to decode the data sent by the UE and the network side successfully detects the CR UE ID sent by the UE, sending, by the network side, a Negative Acknowledgement (NACK) response message to the UE, and sending, to the UE, Uplink (UL) SG Info for data retransmission.

8. The method according to claim 7, when the network side sends the ACK response message to the UE, the method further comprising: if the network side judges that there is still data required to be transmitted in a Buffer of the UE, sending, by the network side to the UE, UL SG Info for new data transmission.

9. A data transmission method, comprising:
receiving, by User Equipment (UE), Pre-Scheduling Grant Information (Info) and Collision Resolution (CR) Info sent by a network side; and
sending, by the UE, data to the network side on a resource indicated by the Pre-Scheduling Grant Info according to codebook configuration Info contained in the CR Info.

10. The method according to claim 9, wherein the codebook configuration Info comprises: Codebook Group Info and Info about a Codebook Index in Group, and a codebook is a spread spectrum codebook with an orthogonal or quasi-orthogonal property.

11. The method according to claim 9, wherein sending, by the UE, the data to the network side on the resource indicated by the Pre-Scheduling Grant Info according to the codebook configuration Info contained in the CR Info comprises:
acquiring or selecting, by the UE, a spread spectrum codebook according to the codebook configuration Info contained in the CR Info, and after extending original data by using the spread spectrum codebook, sending Uplink (UL) data on the resource indicated by the Pre-Scheduling Grant Info, and sending or carrying a CR UE Identifier (ID) and/or Buffer Status Report (BSR) Info.

12. The method according to claim 11, wherein acquiring or selecting, by the UE, the spread spectrum codebook according to the codebook configuration Info contained in the CR Info, and after extending the original data by using the spread spectrum codebook, sending the UL data on the resource indicated by the Pre-Scheduling Grant Info and sending or carrying the CR UE ID comprises:
sending, by the UE, UE dedicated Scheduling Grant (SG) signaling by virtue of a Physical Uplink Control Channel (PUCCH), a time-frequency resource location of the SR signaling being in one-to-one correspondence with the UE ID; or,
carrying, by the UE, a mask uniquely corresponding to the UE ID in the PUCCH or a Physical Uplink Shared Channel (PUSCH).

13. The method according to claim 9, further comprising: after sending, by the UE, the data to the network side on the resource indicated by the Pre-Scheduling Grant Info according to the codebook configuration Info contained in the CR Info,
receiving, by the UE, a response feedback message sent by the network side, and acknowledging a data transmission success or failure according to the response feedback message.

14. The method according to claim 9, further comprising: after sending, by the UE, the data to the network side on the resource indicated by the Pre-Scheduling Grant Info according to the codebook configuration Info contained in the CR Info,
when there is still data required to be transmitted in a Buffer of the UE and the UE receives UL grant Info sent by the network side, transmitting new data or retransmitting the data on a UL grant resource indicated by the UL grant Info.

15. A data transmission system, applied to a network side, comprising:
a first sending module, arranged to send Pre-Scheduling Grant Information (Info) and Collision Resolution (CR) Info to User Equipment (UE); and
a first receiving module, arranged to receive data sent by the UE on a resource indicated by the Pre-Scheduling Grant Info according to codebook configuration Info contained in the CR Info.

16. A data transmission system, applied to User Equipment (UE), comprising:
a second receiving module, arranged to receive Pre-Scheduling Grant Information (Info) and Collision Resolution (CR) Info sent by a network side; and
a second sending module, arranged to send data to the network side on a resource indicated by the Pre-Scheduling Grant Info according to codebook configuration Info contained in the CR Info.

17. A computer-readable storage medium having stored thereon a computer-executable instruction arranged to execute the method according to any one of claims 1-14.
